# EUROPÄISCHE PATENTANMELDUNG

(11) **EP 0 884 503 A2**
(43) Veröffentlichungstag der Anmeldung: **16.12.1998**
(21) Anmeldenummer: 98110811.1
(22) Anmeldetag: 12.06.1998
(51) Int. Cl.: F16F 15/14

(54) **Drehschwingungstilger, insbesondere für Nockenwellen und Einspritzpumpen**

(30) Priorität: 12.06.1997 DE 19724878
(71) Anmelder: PAGUAG GmbH & Co., 40472 Düsseldorf (DE)
(72) Erfinder: Kricke, Martin, 40699 Erkrath (DE)
(74) Vertreter: Patentanwälte Lippert, Stachow, Schmidt & Partner

(57) **Zusammenfassung**

Bei einem Drehschwingungstilger für Nockenwellen und Einspritzpumpen mit einem konzentrisch zu einem Zahnriemenrad angeordneten Schwungring (8), der auf einem in Umfangsrichtung des Zahnriemenrades (1) wirksamen Elastomerkörper (7) drehfest angeordnet ist, ist gemäß der Erfindung vorgesehen, daß der Elastomerkörper (7) unter Auslassung eines sonst üblichen Nabenrings direkt auf den Grundkörper (3) des Zahnriemenrades (1) aufvulkanisiert ist.

## Beschreibung

Die Erfindung betrifft einen Drehschwingungstilger, insbesondere für Nockenwellen und Einspritzpumpen mit einer konzentrisch zu einem zumindest teilweise rotationssymmetrisch ausgebildeten Maschinenteil angeordneten Schwungmasse, die auf einer in Umfangsrichtung des Maschinenteils wirksamen Gummi-Federeinrichtung drehfest angeordnet ist.

Ein solcher Drehschwingungstilger ist beispielsweise aus der DE 195 09 384 bekannt. Der in der DE 195 09 384 beschriebene Drehschwingungstilger ist zur unverrückbaren Festlegung auf dem Außenumfang eines zylindrischen Maschinenteils ausgebildet und umfaßt einen Naben- und einen Schwungring, die durch Speichen aus Gummi relativ bewegbar miteinander verbunden sind, wobei zusätzlich zu den Speichen der Nabenring aus Gummi besteht und einstückig in die Speichen übergehend ausgebildet ist.

Die DE 195 09 384 setzt einen Drehschwingungstilger als bekannt voraus, bei welchem die Gummi-Speichen im Bereich ihres Innenumfangs an einem Nabenring aus Metall festgelegt sind, der in einem separaten Arbeitsschritt erzeugt ist. Der metallene Nabenring ist auf dem Außenumfang eines zylindrischen Maschinenteils durch Verpressen festgelegt. Dies wird als herstellungstechnisch aufwendig empfunden.

Weiterhin wird in der DE 195 09 384 ein Drehschwingungstilger als bekannt vorausgesetzt, dessen Schwungring einen einvulkanisierten Gummiring aufweist, der auf dem Außenumfang des zylindrischen Maschinenteils festgelegt wird. Mit diesem sollen sich keine niederfrequenten Schwingungen großer Amplitude übertragen lassen, weil es nicht möglich ist, mit einem eingepreßten Gummiring die zur unverrückbaren Festlegung an dem zylindrischen Maschinenteil erforderlichen Anpreßkräfte auf dieses zu übertragen, wenn der Gummiring mit in Umfangsrichtung verteilten Speichen oder Ausnehmungen versehen ist. Auch bei dieser Bauform soll zur sicheren Festlegung des Gummirings auf dem Maschinenteil ein metallener Nabenring unentbehrlich sein.

Um eine leichtere Montierbarkeit des Drehschwingungstilgers und eine Verminderung dessen Herstellungskosten zu erreichen, wird in der DE 195 09 384 daher vorgeschlagen, den Nabenring aus Gummi bestehend und einstückig in die Speichen übergehend auszubilden. Der Nabenring soll herstellungsbedingt einen Innendurchmesser aufweisen, der kleiner als der Außendurchmesser des ihn während der bestimmungsgemäßen Verwendung aufnehmenden zylindrischen Maschinenteils ist, dieser erfährt dadurch während seiner Montage eine elastische Aufweitung in radiale Richtung, was eine radiale Vorspannung der Speichen bewirkt und den Nabenring auf dem zylindrischen Maschinenteil sicher festhält. Zusätzlich wird bei dem bekannten Drehschwingungstilger vorgeschlagen, den Nabenring an dem zylindrischen Maschinenteil festzukleben, damit eine völlig unverrückbare Festlegung des Nabenrings gewährleistet ist.

Zur Verbesserung der Gebrauchseigenschaften des Drehschwingungstilgers ist es weiterhin unerläßlich, daß in den Nabenring eine sich in Umfangsrichtung erstreckende Verstärkungseinlage eingebettet ist.

Der in der DE 195 09 384 beschriebene Drehschwingungstilger stellt zwar eine herstellungstechnische Vereinfachung gegenüber den dort als bekannt unterstellten Drehschwingungstilgern her, jedoch ist dessen Herstellung nach wie vor vergleichsweise aufwendig.

Aufgabe der vorliegenden Erfindung ist es daher, einen Drehschwingungstilger der eingangs genannten Art derart weiterzubilden, daß sich eine weitere Verminderung des Herstellungsaufwands und damit der Herstellungskosten ergibt.

Die Aufgabe wird gemäß der Erfindung dadurch gelöst, daß die Gummi-Federeinrichtung unter Auslassung eines sonst üblichen Nabenrings direkt auf das Maschinenteil aufvulkanisiert ist.

Durch das Weglassen des sonst üblichen Nabenrings ergeben sich Bauraum-, Gewichts- und Preisvorteile. Weiterhin vorteilhaft ist, daß durch den Entfall des zusätzlichen Nabenrings und des hierdurch entbehrlichen Aufpressens des Nabenrings eine Toleranzaddition ausgeschlossen ist, so daß der Drehschwingungstilger mit einer außerordentlich geringen Unwucht herstellbar ist. Der erfindungsgemäße Drehschwingungstilger ist daher erheblich preiswerter in der Herstellung, nicht zuletzt durch die Einsparung eines Bauteils sowie eines Herstellungsschrittes.

Vorzugsweise ist als Gummi-Federeinrichtung wenigstens ein Elastomerkörper vorgesehen, der sich zwischen der als Schwungring ausgebildeten Schwungmasse und dem Maschinenteil erstreckt.

Die Gummi-Federeinrichtung kann beispielsweise durch mehrere sich radial zwischen dem Maschinenteil und dem Schwungring erstreckende Gummi-Speichen gebildet sein. Es kann jedoch auch ein ringförmiger ununterbrochener Elastomerkörper vorgesehen sein, je nachdem, welche Federungs- und Dämpfungseigenschaften der Drehschwingungstilger aufweisen soll.

Gemäß einer bevorzugten Ausführungsform der Erfindung ist als Maschinenteil ein vorzugsweise gesintertes Zahnriemenrad vorgesehen, in welches die Schwungmasse integriert ist, d. h., daß die Schwungmasse und die Gummi-Federeinrichtung in einer in axiale Richtung offenen Nut oder Vertiefung des Zahnriemenrades festgelegt sind, wobei der Außenumfang des Zahnriemenrades größer als derjenige des Schwungrings ist.

Vorzugsweise ist die Gummi-Federeinrichtung auf einen napf- oder tellerförmigen Grundkörper des Zahnriemenrades aufvulkanisiert, wobei der tellerförmige Grundkörper des Zahnriemenrades konzentrisch von dem Zahnprofil umgeben wird.

Weiterhin Gegenstand der Erfindung ist ein Gummi-Metallteil, das durch Vulkanisieren eines Elastomerkörpers mit einem pulvermetallurgisch hergestellten Bauteil erhalten wurde.

Es bestand bislang seitens der Anmelderin das Vorurteil, daß eine Vulkanisationsverbindung zwischen Sintermetall-Bauteilen und Elastomerkörpern aufgrund der porigen Struktur und der Verunreinigung des Sinter-Werkstoffs nicht oder mit nicht ausreichender Scherfestigkeit herstellbar sind, da die in der Regel porige Struktur von Sinter-Bauteilen gewöhnlich mit Gleitwachsen und Kalibrierölen verunreinigt ist.

Die Anmelderin hat aber in Versuchen überraschenderweise festgestellt, daß eine solche Verbindung (Sintermetall/Gummi) nach entsprechender Vorbehandlung der Sintermetall-Bauteile durchaus beherrschbar ist.

Aufgrund der bekannten Eingenschaften des Sintermetall-Werkstoffs wurde im Stand der Technik offensichtlich stets davon ausgegangen, daß beispielsweise bei der Herstellung von Drehschwingungstilgern das Einvulkanisieren eines metallenen Nabenrings in den Elastomerkörper erforderlich ist, um diesen dann auf dem zylindrischen Maschinenteil aus Sintermetall durch Verpressen festzulegen.

Vorzugsweise ist das auf pulvermetallurgischem Wege hergestellte Bauteil vor dem Vulkanisieren dampfbehandelt worden. Eine solche Behandlung hat sich als besonders geeignet zur Herstellung des erfindungsgemäßen Gummi-Metallteils erwiesen.

Bisher war die Dampfbehandlung von Sintermetall-Bauteilen zur Steigerung der Härte und Verschleißfähigkeit bekannt. Die Sintermetall-Bauteile werden bei der Dampfbehandlung überhitztem Wasserdampf bei Temperaturen von 430 bis 480 °C ausgesetzt. Dabei bildet sich eine Eisenoxid-Schicht auf dem Sintermetall-Bauteil, die einen Korrosionsschutz bildet. Die durch die Wasserdampfoxidation entstehende Schicht auf dem Sintermetall-Bauteil erzeugt einen außerordentlich guten Haftgrund für beispielsweise aufzubringende Beschichtungen, was für einen späteren Vulkanisationsprozeß förderlich ist. Außerdem werden bei den außerordentlich hohen Temperaturen, denen das Sintermetall-Bauteil während der Dampfbehandlung ausgesetzt ist, den Poren des Sintermetall-Bauteils anhaftende Verunreinigungen, beispielsweise Kalibrieröle und Gleitwachse ausgetrieben.

Gemäß einer besonders bevorzugten Ausführungsform der Erfindung ist das Gummi-Metallteil als an sich bekannter Drehschwingungstilger ausgebildet, bei welchem die Vulkanisationsverbindung im Gebrauch einer Scherbeanspruchung unterliegt.

Die Vulkanisationsverbindung zwischen Gummi und Sintermetall ist überraschenderweise besonders scherfest und hoch beanspruchbar.

Ein Ausführungsbeispiel der Erfindung wird nachstehend anhand der Zeichnungen erläutert.

Es zeigen:

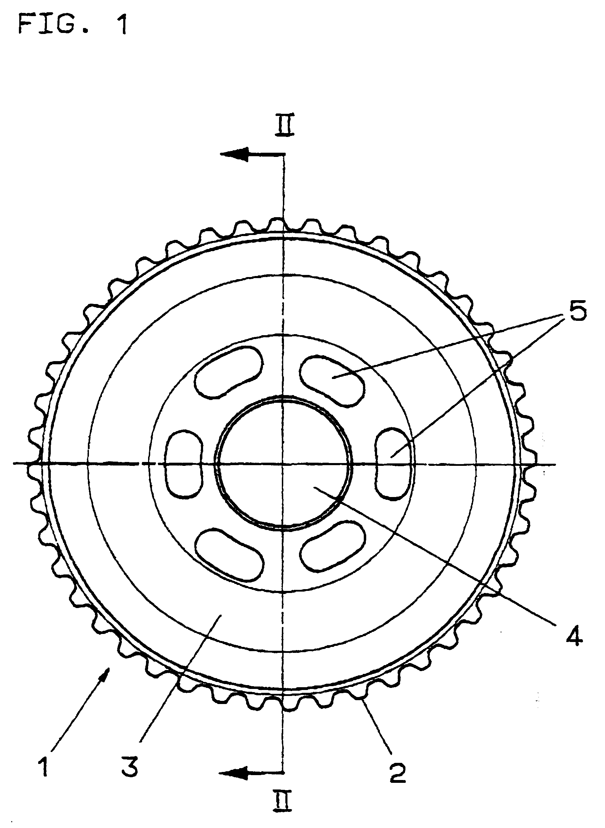

- Fig. 1: eine Ansicht eines Zahnriemenrades mit integriertem Drehschwingungstilger und
- Fig. 2: einen Schnitt durch das Zahnriemenrad aus Fig. 1 entlang der Linien II-II.

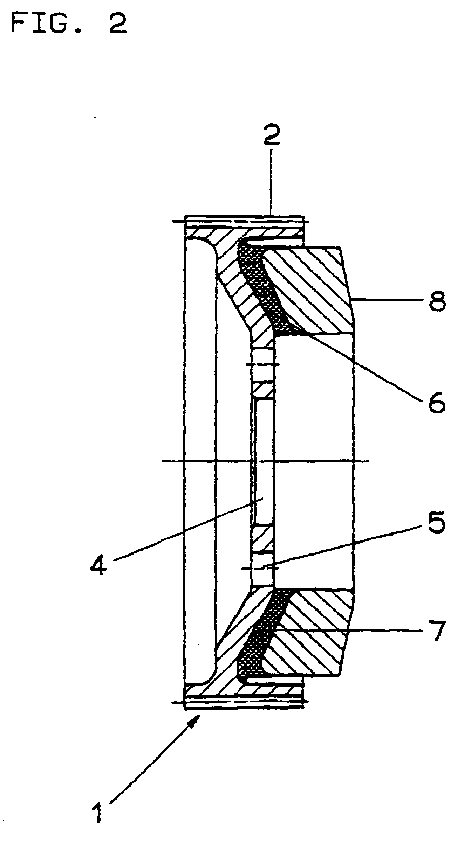

Das in der Zeichnung dargestellte Maschinenteil ist als gesintertes, d. h. auf pulvermetallurgischem Wege hergestelltes Zahnriemenrad 1 ausgebildet. Wie insbesondere der in Fig. 2 dargestellten Schnittansicht zu entnehmen ist, ist das Zahnprofil 2 konzentrisch um einen napf- oder tellerförmigen Grundkörper 3 angeordnet, der mit einer zentralen kreiszylindrischen Durchbrechung 4 und diese konzentrisch umgebenden Langlöchern 5 als Befestigungsmittel zur drehfesten Festlegung auf oder an einer Welle versehen ist. Der Grundkörper 3 des Zahnriemenrades 1 weist einen sich von den Langlöchern 5 aus gesehen in Richtung auf das Zahnprofil 2 erstreckende Schräge 6 auf, die die im Querschnitt tellerförmige Kontur des Grundkörpers 3 bildet. Auf die in Richtung auf das Zahnprofil 2 abfallende Schräge 6 des Grundkörpers 3 ist ein Elastomerkörper 7 als Gummi-Federelement aufvulkanisiert. Die Schräge 6 des Grundkörpers 3 übernimmt dabei die Funktion der sonst bei derartigen Maschinenteilen üblichen Nabe.

Weiterhin ist ein eine Schwungmasse bildender Schwungring 8 durch Vulkanisieren mit dem Elastomerkörper 7 verbunden.

Wie der Zeichnung ohne weiteres zu entnehmen ist, ist der Schwungring 8 in die in axiale Richtung durch die tellerförmige Ausbildung des Grundkörpers 3 gebildete Vertiefung eingepaßt und wird ebenfalls teilweise konzentrisch von dem Zahnprofil 2 des Zahnriemenrades 1 umgeben.

In dem dargestellten Ausführungsbeispiel ist nur ein Elastomerkörper 7 in Form einer verhältnismäßig dicken Gummispur zwischen dem Schwungring 8 und dem Grundkörper 3 des Zahnriemenrades angeordnet. Anstelle eines Elastomerkörpers 7 können als Gummi-Federeinrichtung mehrere sich radial erstreckende speichenförmig ausgebildete Elastomerkörper vorgesehen sein, je nach der gewünschten Dämpfungscharakteristik des Drehschwingungstilgers.

Der Grundkörper 3 muß nicht notwendigerweise napf- oder tellerförmig ausgebildet sein, vielmehr kann dieser eine übliche Nabe ausbilden, auf die der Elastomerkörper aufvulkanisiert ist.

Die vorstehend beschriebene Ausbildung des Zahnriemenrades ermöglicht jedoch die Integration des Drehschwingungstilgers, bestehend aus Elastomerkörper 7 und Schwungring 8 in das Zahnriemenrad 1 in einer sehr platzsparenden und kompakten Art und Weise.

### Bezugszeichenliste

- 1: Zahnriemenrad
- 2: Zahnprofil
- 3: Grundkörper
- 4: Durchbrechung
- 5: Langlöcher
- 6: Schräge
- 7: Elastomerkörper
- 8: Schwungring

## Patentansprüche

1. Drehschwingungstilger, insbesondere für Nockenwellen und Einspritzpumpen mit einer konzentrisch zu einem zumindest teilweise rotationssymmetrisch ausgebildeten Maschinenteil angeordneten Schwungmasse, die auf einer in Umfangsrichtung des Maschinenteils wirksamen Gummi-Federeinrichtung drehfest angeordnet ist, **dadurch gekennzeichnet**, daß die Gummi-Federeinrichtung unter Auslassung eines sonst üblichen Nabenrings direkt auf das Maschinenteil aufvulkanisiert ist.

2. Drehschwingungstilger nach Anspruch 1, **dadurch gekennzeichnet**, daß als Gummi-Federeinrichtung wenigstens ein Elastomerkörper (7) vorgesehen ist, der sich zwischen der als Schwungring (8) ausgebildeten Schwungmasse und dem Maschinenteil erstreckt.

3. Drehschwingungstilger nach Anspruch 1 oder 2, **dadurch gekennzeichnet**, daß die Gummi-Federeinrichtung durch mehrere sich radial zwischen dem Maschinenteil und dem Schwungring (8) erstreckende Gummi-Speichen gebildet wird.

4. Drehschwingungstilger nach einem der Ansprüche 1 bis 3, **dadurch gekennzeichnet**, daß als Maschinenteil ein vorzugsweise gesintertes Zahnriemenrad (1) vorgesehen ist, in welches die Schwungmasse integriert ist.

5. Drehschwingungstilger nach einem der Ansprüche 1 bis 4, **dadurch gekennzeichnet**, daß die Gummi-Federeinrichtung auf einen napf- oder tellerförmigen Grundkörper (3) des Zahnriemenrades (1) aufvulkanisiert ist.

6. Gummi-Metallteil, das durch Vulkanisieren eines Elastomerkörpers mit einem pulvermetallurgisch hergestellten Bauteil erhalten wurde.

7. Gummi-Metallteil nach Anspruch 6, **dadurch gekennzeichnet**, daß das auf pulvermetallurgischem Wege hergestellte Bauteil vor dem Vulkanisieren dampfbehandelt worden ist.

8. Gummi-Metallteil nach einem der Ansprüche 6 oder 7, **dadurch gekennzeichnet**, daß es als an sich bekannter Drehschwingungstilger ausgebildet ist, bei welchem die Vulkanisationsverbindung im Gebrauch einer Scherbeanspruchung unterliegt.
